(19) **Europäisches Patentamt / European Patent Office / Office européen des brevets**

(11) **EP 4 763 671 A1**

(12) # EUROPEAN PATENT APPLICATION

(43) Date of publication:
24.06.2026 Bulletin 2026/26

(21) Application number: 25223390.3

(22) Date of filing: 15.12.2025

(51) International Patent Classification (IPC):
*B62D 7/08* (2006.01)     *B62D 6/00* (2006.01)
*B62D 7/15* (2006.01)     *B62D 15/02* (2006.01)

(52) Cooperative Patent Classification (CPC):
**B62D 7/08; B62D 6/00; B62D 6/002; B62D 6/003;
B62D 7/159; B62D 15/025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.12.2024 US 202418999287**

(71) Applicant: **Volvo Truck Corporation
405 08 Göteborg (SE)**

(72) Inventors:
 • **SHANMUGASUNDARAM, Arun**
 Lewisville, 27023 (US)
 • **DAWSON, Joshua**
 Summerfield, 27358 (US)

(74) Representative: **Zacco Sweden AB**
**P.O. Box 5581**
**Löjtnantsgatan 21**
**114 85 Stockholm (SE)**

(54) **MACHINE LEARNING MODEL FOR STEERING CONTROL SYSTEM OF A VEHICLE**

(57)    A steering control system includes a right side actuator for independently controlling a right wheel steering angle for a right wheel of a vehicle and a left side actuator for independently controlling a left wheel steering angle for a left wheel of the vehicle. The steering control system determines a plurality of vehicle parameters, and determines, using a machine learning model, independent control instructions for the right side actuator and the left side actuator based on the determined plurality of vehicle parameters. The steering control system independently operates the right side actuator based on the independent control instructions to control the right wheel steering angle, and independently operates the left side actuator based on the independent control instructions to control the left wheel steering angle.

FIG. 2

## Description

## TECHNICAL FIELD

The disclosure relates generally to a steering control systems. In particular aspects, the disclosure relates to a machine learning model for a steering control system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Many steering systems for vehicles employ Ackerman geometry for controlling steering angles and other parameters. Ackerman geometry is based on the wheelbase of the vehicle, which can vary across vehicle models and platforms, making it challenging to use existing mechanical linkages with different unique Ackerman geometries. There is a need for a steering system that does not have these and other limitations.

## SUMMARY

According to a first aspect of the disclosure, a steering control system includes a right side actuator for independently controlling a right wheel steering angle for a right wheel of a vehicle, a left side actuator for independently controlling a left wheel steering angle for a left wheel of the vehicle, a processor circuit, and a memory comprising machine readable instructions. When executed by the processor circuit, the instructions cause the processor circuit to: determine a plurality of vehicle parameters; determine, using a machine learning model, independent control instructions for the right side actuator and the left side actuator based on the determined plurality of vehicle parameters; independently operate the right side actuator based on the independent control instructions to control the right wheel steering angle; and independently operate the left side actuator based on the independent control instructions to control the left wheel steering angle. The first aspect of the disclosure may seek to obtain and apply optimal steering angles for vehicle wheels. A technical benefit may include optimizing steering angles and traction for different vehicle platforms having different vehicle parameters.

Optionally in some examples, including in at least one preferred example, the determination of the independent control instructions comprises: determining a first optimal slip angle for the right wheel associated with a peak lateral force generation for the right wheel; determining a second optimal slip angle for the left wheel associated with a peak lateral force generation for the left wheel. Independent operation of the right side actuator rotates the right wheel steering angle to the first optimal slip angle, and independent operation of the left side actuator rotates the left wheel steering angle to the second optimal slip angle.

Optionally in some examples, including in at least one preferred example, the vehicle comprises at least four wheels including the right wheel and the left wheel.

Optionally in some examples, including in at least one preferred example, the plurality of vehicle parameters comprises a measured slip angle of at least one tire disposed on at least one wheel of the vehicle.

Optionally in some examples, including in at least one preferred example, the plurality of vehicle parameters comprises a measured turning angle of at least one of the right wheel and the left wheel.

Optionally in some examples, including in at least one preferred example, the plurality of vehicle parameters comprises a measured longitudinal velocity of the vehicle.

Optionally in some examples, including in at least one preferred example, the plurality of vehicle parameters comprises a measured lateral velocity of the vehicle.

Optionally in some examples, including in at least one preferred example, the plurality of vehicle parameters comprises a measured yaw rate of the vehicle.

Optionally in some examples, including in at least one preferred example, the plurality of vehicle parameters comprises a front traction width between the right wheel and the left wheel of the vehicle, wherein the right wheel is a right front wheel and wherein the left wheel is a left front wheel.

Optionally in some examples, including in at least one preferred example, the plurality of vehicle parameters comprises a rear traction width between a first rear wheel of the vehicle and a second rear wheel of the vehicle.

Optionally in some examples, including in at least one preferred example, the plurality of vehicle parameters comprises a distance between a front axle of the vehicle and a center of gravity of the vehicle.

Optionally in some examples, including in at least one preferred example, the plurality of vehicle parameters comprises a distance between a rear axle of the vehicle and a center of gravity of the vehicle.

Optionally in some examples, including in at least one preferred example, the determination of the independent control instructions comprises: training the machine learning model using a plurality of previously measured vehicle parameters comprising at least one of a group consisting of: a previously measured slip angle of at least one tire disposed on at least one wheel of the vehicle; a previously measured turning angle of at least one of the right wheel and the left wheel; a previously measured longitudinal velocity of the vehicle; a previously measured lateral velocity of the vehicle; a previously measured yaw rate of the vehicle; a previously measured front traction width between the right wheel and the left wheel of the vehicle, wherein the right wheel is a right front wheel and wherein the left wheel is a left front wheel; a previously measured rear traction width between a first rear wheel of the vehicle and a second rear wheel of the vehicle; a previously measured distance between a front axle of the vehicle and a center of gravity of the vehicle; and a previously measured distance between a rear axle of the vehicle and a center of gravity of the vehicle; and determining the independent control instructions based on the trained machine learning model and the plurality of vehicle parameters.

According to a second aspect of the disclosure a method includes: determining, by a processor circuit of a computing device, a plurality of vehicle parameters; determining, by the processor circuit using a machine learning model, independent control instructions for the right side actuator and the left side actuator based on the determined plurality of vehicle parameters; independently operating, by the processor circuit, the right side actuator based on the independent control instructions to control the right wheel steering angle; independently operating, by the processor circuit, the left side actuator based on the independent control instructions to control the left wheel steering angle. The second aspect of the disclosure may seek to obtain and apply optimal steering angles for vehicle wheels. A technical benefit may include optimizing steering angles and traction for different vehicle platforms having different vehicle parameters.

Optionally in some examples, including in at least one preferred example, determining the independent control instructions comprises: determining a first optimal slip angle for the right wheel associated with a peak lateral force generation for the right wheel; determining a second optimal slip angle for the left wheel associated with a peak lateral force generation for the left wheel. Independently operating the right side actuator rotates the right wheel steering angle to the first optimal slip angle, and independently operating the left side actuator rotates the left wheel steering angle to the second optimal slip angle.

Optionally in some examples, including in at least one preferred example, the plurality of vehicle parameters comprises at least one of a group consisting of: a measured slip angle of at least one tire disposed on at least one wheel of the vehicle; a measured turning angle of at least one of the right wheel and the left wheel; a measured longitudinal velocity of the vehicle; a measured lateral velocity of the vehicle; a measured yaw rate of the vehicle; a front traction width between the right wheel and the left wheel of the vehicle, wherein the right wheel is a right front wheel and wherein the left wheel is a left front wheel; a rear traction width between a first rear wheel of the vehicle and a second rear wheel of the vehicle; a distance between a front axle of the vehicle and a center of gravity of the vehicle; and a distance between a rear axle of the vehicle and a center of gravity of the vehicle.

Optionally in some examples, including in at least one preferred example, determining the independent control instructions comprises: training the machine learning model using a plurality of previously measured vehicle parameters comprising at least one of a group consisting of: a previously measured slip angle of at least one tire disposed on at least one wheel of the vehicle; a previously measured turning angle of at least one of the right wheel and the left wheel; a previously measured longitudinal velocity of the vehicle; a previously measured lateral velocity of the vehicle; a previously measured yaw rate of the vehicle; a previously measured front traction width between the right wheel and the left wheel of the vehicle, wherein the right wheel is a right front wheel and wherein the left wheel is a left front wheel; a previously measured rear traction width between a first rear wheel of the vehicle and a second rear wheel of the vehicle; a previously measured distance between a front axle of the vehicle and a center of gravity of the vehicle; and a previously measured distance between a rear axle of the vehicle and a center of gravity of the vehicle; and determining the independent control instructions based on the trained machine learning model and the plurality of vehicle parameters.

According to a third aspect of the disclosure a non-transitory computer readable medium includes machine readable instructions that, when executed by the processor circuit, cause the processor circuit to: determine a plurality of vehicle parameters for a vehicle; determine, using a machine learning model, independent control instructions for the right side actuator and the left side actuator based on the determined plurality of vehicle parameters; independently operate the right side actuator based on the independent control instructions to control the right wheel steering angle; and independently operate the left side actuator based on the independent control instructions to control the left wheel steering angle. The third aspect of the disclosure may seek to obtain and apply optimal steering angles for vehicle wheels. A technical benefit may include optimizing steering angles and traction for different vehicle platforms having different vehicle parameters.

Optionally in some examples, including in at least one preferred example, the determination of the independent control instructions comprises: determining a first optimal slip angle for the right wheel associated with a peak lateral force generation for the right wheel; determining a second optimal slip angle for the left wheel associated with a peak lateral force generation for the left wheel, wherein independent operation of the right side actuator rotates the right wheel steering angle to the first optimal slip angle, and wherein independent operation of the left side actuator rotates the left wheel steering angle to the second optimal slip angle.

Optionally in some examples, including in at least one preferred example, the plurality of vehicle parameters comprises at least one of a group consisting of: a measured slip angle of at least one tire disposed on at least one wheel of the vehicle; a measured turning angle of at least one of the right wheel and the left wheel; a measured longitudinal velocity of the vehicle; a measured lateral velocity of the vehicle; a measured yaw rate of the vehicle; a traction width between the right wheel and the left wheel of the vehicle; a traction width between a first rear wheel of the vehicle and a second rear wheel of the vehicle; a distance between a front axle of the vehicle and a center of gravity of the vehicle; and a distance between a rear axle of the vehicle and a center of gravity of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

FIG. 1 is a diagram of a vehicle steering system for a vehicle according to the prior art.
FIG. 2 is an exemplary diagram of a process of training a machine-learning model for independent control of right wheel and left wheel steering angles and using the machine-learning model to independent control of right wheel and left wheel steering angles, according to an example.
FIG. 3 is an exemplary diagram of a machine-learning model including a plurality of neural network nodes for independent control of right wheel and left wheel steering angles, according to an example.
FIG. 4 is a diagram of a vehicle steering system with sensors for detecting vehicle parameters and inputs for the machine-learning model, according to an example.
FIG. 5 is a flow chart of an exemplary method to independently control right wheel and left wheel steering angles according to an example.
FIG. 6 is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

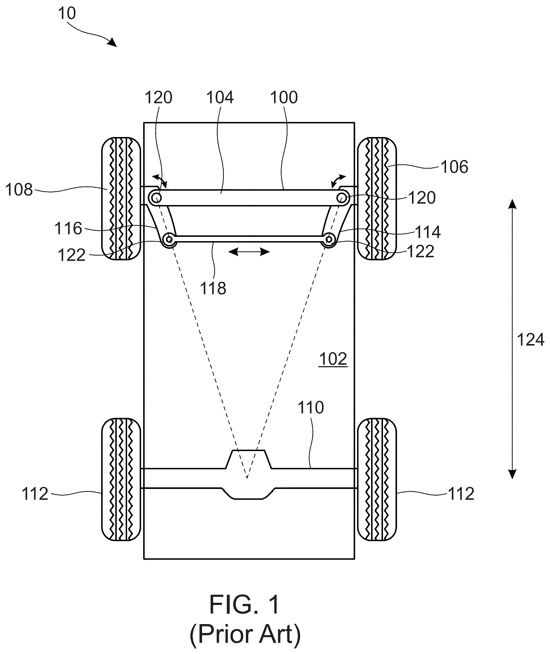

As shown by FIG. 1, a conventional vehicle steering system 100 for a vehicle 10 may include a chassis 102 with a front axle linkage 104 for a right wheel 106 and a left wheel 108, and a rear axle 110 for a pair of rear wheels 112. The front axle linkage 104 may include a rotatable right knuckle 114 for changing a steering angle of the right wheel 106 and a rotatable left knuckle 116 for changing a steering angle of the left wheel 108. In this conventional steering system 100, the right knuckle 114 and the left knuckle 116 are rotatably connected by a tie rod 118, which is movable in a lateral direction to change the steering angles of the right wheel 106 and the left wheel 108 in tandem. The positions of the knuckle joints 120 and the tie rod joints 122 and the wheelbase distance 124 of the vehicle 10 define the Ackerman geometry for the vehicle 10. One drawback of this arrangement is that the steering angles of the right wheel 106 and the left wheel 108 are not independently adjustable, and the Ackerman geometry of the vehicle 10 is not readily adaptable to other vehicle models or platforms having different wheelbases and steering systems.

In this regard, according to exemplary embodiments of this disclosure, a steer-bywire architecture can be provided such that steering angles of the left and right wheels can be independently controlled based on customized Ackerman geometry for different vehicles. In some embodiments, the correct steering angles can be determined from vehicle dynamics equations, tire data, and vehicle data. The control system for independent controlling the steering angles of the wheels can take into consideration some or all of the following parameters: vehicle geometry (e.g., axle positions with respect to a vehicle's center of gravity, track width of the vehicle wheels, etc.), yaw rate, lateral and longitudinal velocity, and/or tire data (e.g., tire quality, temperature, grip, traction parameters, etc.), and/or other parameters, as desired.

Equations for determining the correct steering angles for the right and left wheels may include:

Equation 1 (Right front tire):

$$\alpha_{RF} = Atan \; \frac{V_y + r \cdot a}{V_x + r \cdot T_F/2} \; - \; \delta_{RF}$$

Equation 2 (Right rear tire):

$$\alpha_{RR} = Atan \; \frac{V_y - r \cdot b}{V_x + r \cdot T_R/2}$$

Equation 3 (Left front tire):

$$\alpha_{LF} = Atan \frac{V_y + r \cdot a}{V_x - r \cdot T_F/2} - \delta_{LF}$$

Equation 4 (Left rear tire):

$$\alpha_{LR} = Atan \frac{V_y - r \cdot b}{V_x - r \cdot T_R/2}$$

Where:

$\alpha_{RF}$ is the slip angle of right front tire;
$\alpha_{LF}$ is the slip angle of left front tire;
$\alpha_{RR}$ is the slip angle of right rear tire;
$\alpha_{LR}$ is the slip angle of left rear tire;
$\delta_{RF}$ is the turning angle of right front tire;
$\delta_{LF}$ is the turning angle of left front tire;
$V_y$ is the lateral velocity of the vehicle;
$V_x$ is the longitudinal velocity of the vehicle;
$T_f$ is the front traction width between the front tires;
$T_r$ is the rear traction width between the rear tires;
$r$ is the yaw rate of the vehicle;
a is the distance between the front axle and the center of gravity of the vehicle; and
b is the distance between the rear axle and the center of gravity of the vehicle.

In equations 1-4 above, the vehicle velocities ($V_y$ and $V_x$) and yaw rate ($r$) can be obtained from on-board sensors or other data capturing devices, and the geometric parameters for the specific vehicle configuration can be constants that may be hard coded into the controller.

The remaining parameters, i.e., the slip angles and the turning angles of the tires, can be calculated using a multi-class classification machine learning model. Training data for the model may include simulation models that describe the vehicle dynamics coupled with the tire data for slip angle vs lateral forces. A regression model may also be employed in order to estimate an optimal slip angle for a maneuver being performed by the vehicle, based on the simulation training dataset. In this manner, the machine learning model may predictively determine optimal slip angles that would result in the best possible grip (i.e., peak lateral force generation) for a given turning maneuver in real time.

Once the slip angles ($\alpha_{RF}$, $\alpha_{LF}$, $\alpha_{LR\&}$ $\alpha_{RR}$) are estimated through the machine learning model, the remaining variables (i.e., turning angles for the left and right tires), can be computed, and the controller can provide input signals to actuators in the steering control system that will independently control the steering angles of the left and right tires.

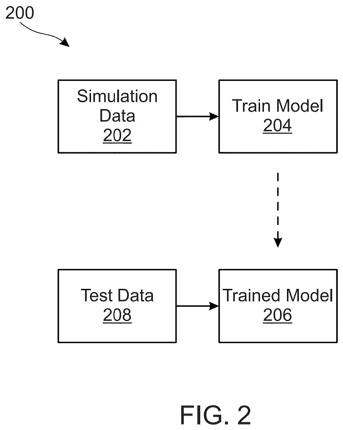

FIG. 2 is an exemplary diagram of a process of training a machine-learning model for independent control of right wheel and left wheel steering angles and using the machine-learning model to independent control of right wheel and left wheel steering angles, according to an example. The process 200 may be used as a machine learning pipeline for determining slip angles for different vehicle configurations and maneuvers based on simulation data and a regression model, for example. The process 200 may be run while the vehicle is operating, i.e., during driving of the vehicle, and/or as a testing routine, i.e., offline. In operation during driving, aspects of the process 200 may be triggered during predetemined conditions, e.g., when sensors or other data capturing devices detect a change in vehicle parameters, such as a change in longitudinal velocity, lateral velocity, yaw rate, etc.

The process 200 first includes acquiring simulation data 202 using the known parameters of the vehicle, e.g., traction widths, wheelbases, distances between axles and the vehicle center of gravity, etc., which are used to train a steering system model 204. During training of the steering system model 204, the healthy data may be preprocessed to generate a time-based function and adjust the various inputs. In some examples, a Convolutional Neural Network (CNN) or Long Short-Term Memory (LSTM) model may be used as a steering system model to accurately capture the interactions between parameters in the simulation data 202.

Test data 208 may next be collected from a system under test and provided to the trained steering system model 206, with simulation data 202 and test data 208 from the test system being processed by the trained model. Test data 208 produced by the system under test may be generated in several different use conditions to further isolate potential variations in performance under different conditions.

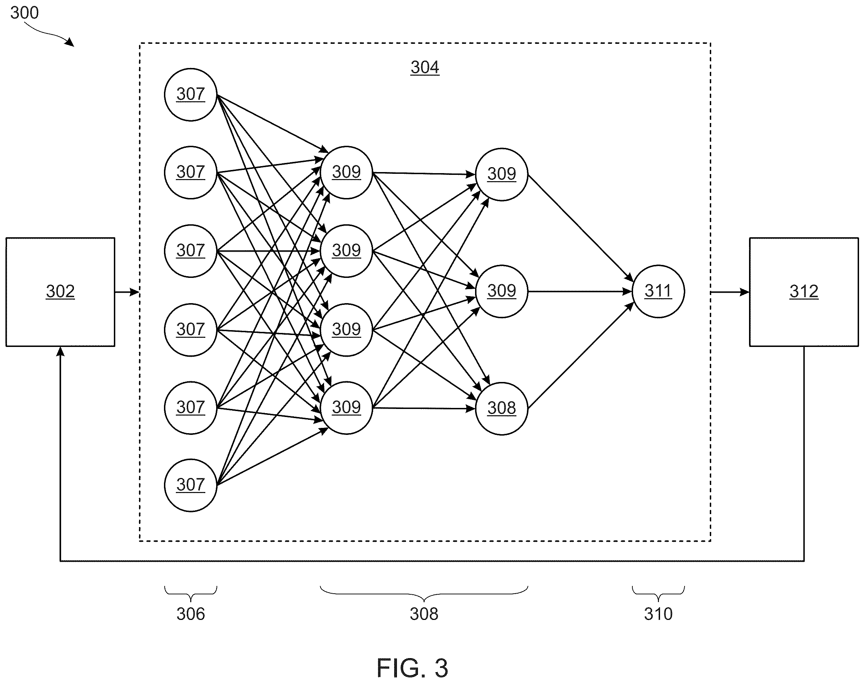

FIG. 3 is an exemplary diagram of a machine-learning model 300 including a plurality of neural network nodes for independent control of right wheel and left wheel steering angles, according to an example. A plurality of input values 302 may be collected using by sensor devices and/or other data collection methods, and as the model 300 is trained and refined, on simulated systems, test systems, and/or systems in the field. In this example, a plurality of input values 302 may be provided to a neural network model 304, such as a CNN, LSTM, and/or Recurrent Neural Network (RNN) model, but it should be understood that other types of AI models, machine-learning models, or other models may be used.

In this example, an input layer 306 of input nodes 307 receives the input data 302. The input nodes 307 are each connected with a plurality of hidden nodes 309 in one or more hidden layers 308, which are in turn connected with other hidden nodes 309 and input nodes 307, and eventually output a result to an output layer 310 having one or more output nodes 311. The output node(s) 311 output one or more output values 312, which may be reprocessed and included as an input in a subsequent set of input data 302, which is reprocessed by the model 304, and so on. It should also be understood that previous samples from other inputs may also be used as subsequent input data 302 as well. Over time, the model 304 generates correlations between different input data 302 to produce more accurate output values 312.

In this example, the model 304 is a supervised Deep Neural Network (DNN) model, selected in part based on its suitability for measurement and analysis of steering system dynamics and related parameters. Other suitable models may include Long Short Term Memory (LTSM), which may include loops between hidden states to previous states. The number and types of layers, data samples, and iterations for training may be tuned according to the particular system configurations and system complexity.

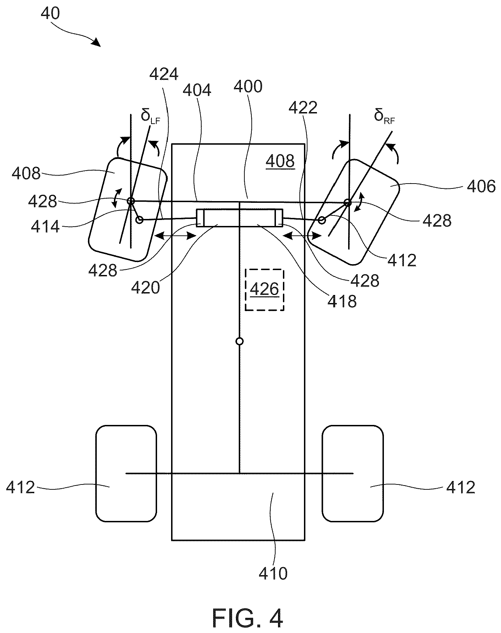

FIG. 4 is a diagram of a vehicle steering system 400 for a vehicle 40 with sensors 428 for detecting vehicle parameters and inputs for the machine-learning model 304 of FIG. 3, according to an example. In this example, a steering control system 400 for the vehicle 40 includes a chassis 402 with a front axle linkage 404 for a right wheel 406 and a left wheel 408, and a rear axle 410 for a pair of rear wheels 412. The front axle linkage 404 may include a rotatable right knuckle 414 for changing a steering angle ($\delta_{RF}$) of the right wheel 406 and a rotatable left knuckle 416 for changing a steering angle ($\delta_{LF}$) of the left wheel 408. In this steering system 400, the right knuckle 414 and the left knuckle 416 are independently rotatable via one or more actuators 418, 420. In this example, a right side actuator 418 is connected to the right knuckle 414 via a right side tie rod 422 for independently controlling a right wheel steering angle for the right wheel 406 of the vehicle 40. Likewise, a left side actuator 420 is connected to the left knuckle 416 via a left side tie rod 424 for independently controlling a left wheel steering angle for the left wheel 408 of the vehicle 40.

In this example, a steering controller 426 may determine a plurality of vehicle parameters, and may further determine, using a machine learning model such as the machine learning model 300 of FIG. 3, independent control instructions for the right side actuator 420 and the left side actuator 422 based on the determined plurality of vehicle parameters. The steering controller thereby independently operates the right side actuator 420 based on the independent control instructions to control the right wheel steering angle of the right wheel 406, and independently operate the left side actuator 422 based on the independent control instructions to control the left wheel steering angle of the left wheel 408.

In this example, the vehicle 40 comprises at least four wheels including the right wheel 406 and the left wheel 408, but it should be understood that embodiments described herein may be used with vehicles with other configurations of one or more wheels.

In this example, a plurality of sensors 428 for measuring different vehicle parameters, such as a slip angle of one or more tires disposed on at least one wheel of the vehicle, a turning angle of at least one of the right wheel 406 and the left wheel 408, a longitudinal velocity of the vehicle 40, a lateral velocity of the vehicle 50, a yaw rate of the vehicle 40, or other parameters. These and other parameters may be measured directly, or may be derived from other direct measurements of other parameters, as desired. Additional parameters may include a measured front traction width between the right wheel 406 and the left wheel 408 of the vehicle 40, a rear traction width between the rear wheels 412 of the vehicle 40, a distance between a front axle and/or front axle linkage 404 of the vehicle 40 and a center of gravity of the vehicle 40, a distance between a rear axle 410 of the vehicle 40 and a center of gravity of the vehicle 40, and/or other parameters, which can be measured, derived, and/or input into the controller as predetermined constants.

As discussed above, the determination of the independent control instructions may include training the machine learning model using a plurality of previously measured vehicle parameters, such as a previously measured slip angle of at least one tire disposed on at least one wheel of the vehicle, a previously measured turning angle of at least one of the right wheel and the left wheel, a previously measured longitudinal velocity of the vehicle, a previously measured lateral velocity of the vehicle, a previously measured yaw rate of the vehicle, a previously measured front traction width between the right wheel and the left wheel of the vehicle, a previously measured rear traction width between a first rear wheel of the vehicle and a second rear wheel of the vehicle, a previously measured distance between a front axle of the vehicle and a center of gravity of the vehicle, and/or a previously measured distance between a rear axle of the vehicle and a center of gravity of the vehicle.

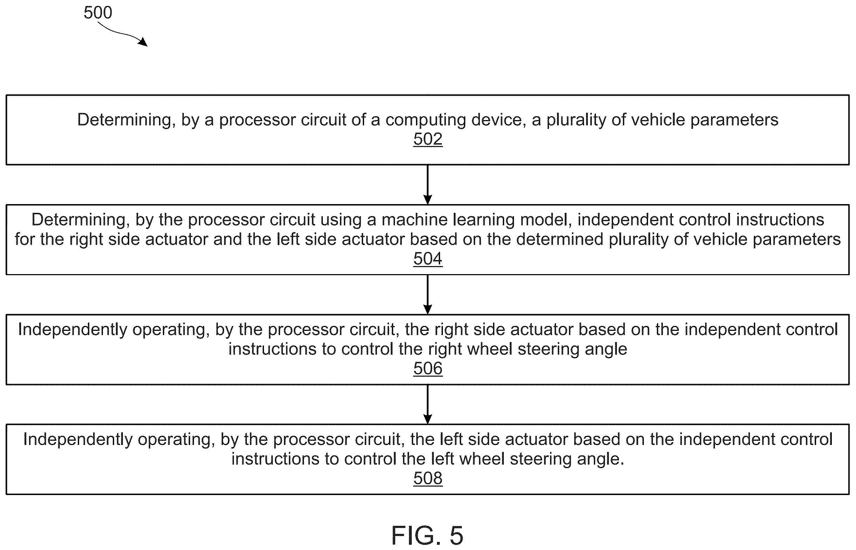

FIG. 5 is a flow chart of operations 500 for an exemplary method to independently control right wheel and left wheel steering angles according to an example. The operations 500 may include determining, by a processor circuit of a computing device, a plurality of vehicle parameters (Block 502). The operations 500 may further include determining, by the processor circuit using a machine learning model, independent control instructions for the right side actuator and the left side actuator based on the determined plurality of vehicle parameters (Block 504). The operations 500 may further include independently operating, by the processor circuit, the right side actuator based on the independent control instructions to control the right wheel steering angle (Block 506). The operations 500 may further include independently operating, by the processor circuit, the left side actuator based on the independent control instructions to control the left wheel steering angle (Block 508).

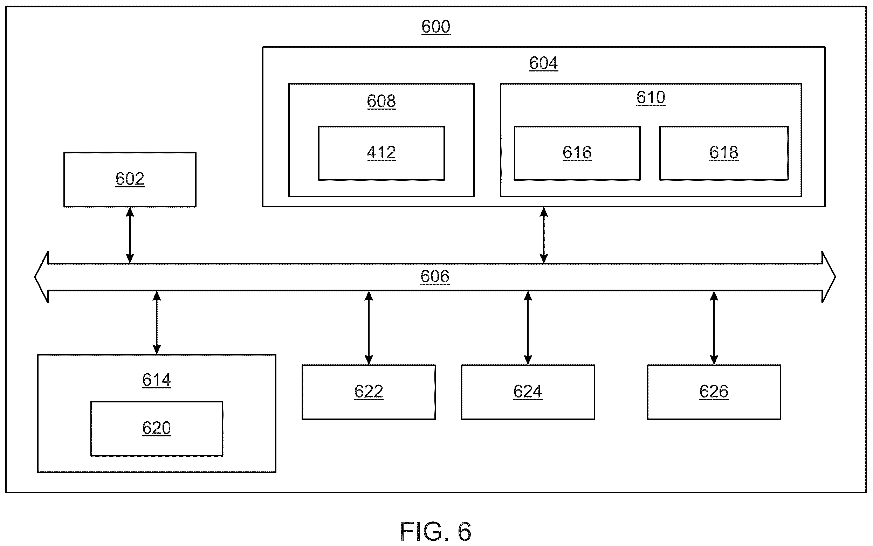

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g.,

networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., randomaccess memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device

interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Further examples include:

Example 1. A steering control system comprising:

a right side actuator for independently controlling a right wheel steering angle for a right wheel of a vehicle;
a left side actuator for independently controlling a left wheel steering angle for a left wheel of the vehicle;
a processor circuit; and
a memory comprising machine readable instructions that, when executed by the processor circuit, cause the processor circuit to:
determine a plurality of vehicle parameters;
determine, using a machine learning model, independent control instructions for the right side actuator and the left side actuator based on the determined plurality of vehicle parameters;
independently operate the right side actuator based on the independent control instructions to control the right wheel steering angle; and
independently operate the left side actuator based on the independent control instructions to control the left wheel steering angle.

Example 2. The steering control system of example 1, wherein the determination of the independent control instructions comprises:

determining a first optimal slip angle for the right wheel associated with a peak lateral force generation for the right wheel;
determining a second optimal slip angle for the left wheel associated with a peak lateral force generation for the left wheel,
wherein independent operation of the right side actuator rotates the right wheel steering angle to the first optimal slip angle, and
wherein independent operation of the left side actuator rotates the left wheel steering angle to the second optimal slip angle.

Example 3. The steering control system of example 1 or 2, wherein the vehicle comprises at least four wheels including the right wheel and the left wheel.

Example 4. The steering control system of examples 1-3, wherein the plurality of vehicle parameters comprises a measured slip angle of at least one tire disposed on at least one wheel of the vehicle.

Example 5. The steering control system of examples 1-4, wherein the plurality of vehicle parameters comprises a measured turning angle of at least one of the right wheel and the left wheel.

Example 6. The steering control system of examples 1-5, wherein the plurality of vehicle parameters comprises a measured longitudinal velocity of the vehicle.

Example 7. The steering control system of examples 1-6, wherein the plurality of vehicle parameters comprises a measured lateral velocity of the vehicle.

Example 8. The steering control system of examples 1-7, wherein the plurality of vehicle parameters comprises a measured yaw rate of the vehicle.

Example 9. The steering control system of examples 1-8,
wherein the plurality of vehicle parameters comprises a front traction width between the right wheel and the left wheel of the vehicle, wherein the right wheel is a right front wheel and wherein the left wheel is a left front wheel.

Example 10. The steering control system of examples 1-9, wherein the plurality of vehicle parameters comprises a rear traction width between a first rear wheel of the vehicle and a second rear wheel of the vehicle.

Example 11. The steering control system of examples 1-10, wherein the plurality of vehicle parameters comprises a distance between a front axle of the vehicle and a center of gravity of the vehicle.

Example 12. The steering control system of examples 1-11, wherein the plurality of vehicle parameters comprises a distance between a rear axle of the vehicle and a center of gravity of the vehicle.

Example 13. The steering control system of examples 1-12, wherein the determination of the independent control instructions comprises:

training the machine learning model using a plurality of previously measured vehicle parameters comprising at least one of a group consisting of:
a previously measured slip angle of at least one tire disposed on at least one wheel of the vehicle;
a previously measured turning angle of at least one of the right wheel and the left wheel;
a previously measured longitudinal velocity of the vehicle;
a previously measured lateral velocity of the vehicle;
a previously measured yaw rate of the vehicle;
a previously measured front traction width between the right wheel and the left wheel of the vehicle, wherein the right wheel is a right front wheel and wherein the left wheel is a left front wheel;
a previously measured rear traction width between a first rear wheel of the vehicle and a second rear wheel of the vehicle;
a previously measured distance between a front axle of the vehicle and a center of gravity of the vehicle; and
a previously measured distance between a rear axle of the vehicle and a center of gravity of the vehicle; and
determining the independent control instructions based on the trained machine learning model and the plurality of vehicle parameters.

Example 14. A method comprising:

determining, by a processor circuit of a computing device, a plurality of vehicle parameters;
determining, by the processor circuit using a machine learning model, independent control instructions for the right side actuator and the left side actuator based on the determined plurality of vehicle parameters;
independently operating, by the processor circuit, the right side actuator based on the independent control instructions to control the right wheel steering angle;
independently operating, by the processor circuit, the left side actuator based on the independent control instructions to control the left wheel steering angle.

Example 15. The method of example 14, wherein determining the independent control instructions comprises:

determining a first optimal slip angle for the right wheel associated with a peak lateral force generation for the right wheel;
determining a second optimal slip angle for the left wheel associated with a peak lateral force generation for the left wheel,
wherein independently operating the right side actuator rotates the right wheel steering angle to the first optimal slip angle, and
wherein independently operating the left side actuator rotates the left wheel steering angle to the second optimal slip angle.

Example 16. The method of example 14 or 15, wherein the plurality of vehicle parameters comprises at least one of a group consisting of:

a measured slip angle of at least one tire disposed on at least one wheel of the vehicle;
a measured turning angle of at least one of the right wheel and the left wheel;
a measured longitudinal velocity of the vehicle;
a measured lateral velocity of the vehicle;
a measured yaw rate of the vehicle;
a front traction width between the right wheel and the left wheel of the vehicle, wherein the right wheel is a right front wheel and wherein the left wheel is a left front wheel;
a rear traction width between a first rear wheel of the vehicle and a second rear wheel of the vehicle;
a distance between a front axle of the vehicle and a center of gravity of the vehicle; and
a distance between a rear axle of the vehicle and a center of gravity of the vehicle.

Example 17. The method of examples 14-16, wherein determining the independent control instructions comprises:

training the machine learning model using a plurality of previously measured vehicle parameters comprising at least one of a group consisting of:
a previously measured slip angle of at least one tire disposed on at least one wheel of the vehicle;
a previously measured turning angle of at least one of the right wheel and the left wheel;
a previously measured longitudinal velocity of the vehicle;
a previously measured lateral velocity of the vehicle;

a previously measured yaw rate of the vehicle;

a previously measured front traction width between the right wheel and the left wheel of the vehicle, wherein the right wheel is a right front wheel and wherein the left wheel is a left front wheel;

a previously measured rear traction width between a first rear wheel of the vehicle and a second rear wheel of the vehicle;

a previously measured distance between a front axle of the vehicle and a center of gravity of the vehicle; and

a previously measured distance between a rear axle of the vehicle and a center of gravity of the vehicle; and

determining the independent control instructions based on the trained machine learning model and the plurality of vehicle parameters.

Example 18. A non-transitory computer readable medium comprising machine readable instructions that, when executed by the processor circuit, cause the processor circuit to:

determine a plurality of vehicle parameters for a vehicle;

determine, using a machine learning model, independent control instructions for the right side actuator and the left side actuator based on the determined plurality of vehicle parameters;

independently operate the right side actuator based on the independent control instructions to control the right wheel steering angle; and

independently operate the left side actuator based on the independent control instructions to control the left wheel steering angle.

Example 19. The non-transitory computer readable medium of example 18, wherein the determination of the independent control instructions comprises:

determining a first optimal slip angle for the right wheel associated with a peak lateral force generation for the right wheel;

determining a second optimal slip angle for the left wheel associated with a peak lateral force generation for the left wheel,

wherein independent operation of the right side actuator rotates the right wheel steering angle to the first optimal slip angle, and

wherein independent operation of the left side actuator rotates the left wheel steering angle to the second optimal slip angle.

Example 20. The non-transitory computer readable medium of example 18 or 19, wherein the plurality of vehicle parameters comprises at least one of a group consisting of:

a measured slip angle of at least one tire disposed on at least one wheel of the vehicle;

a measured turning angle of at least one of the right wheel and the left wheel;

a measured longitudinal velocity of the vehicle;

a measured lateral velocity of the vehicle;

a measured yaw rate of the vehicle;

a traction width between the right wheel and the left wheel of the vehicle;

a traction width between a first rear wheel of the vehicle and a second rear wheel of the vehicle;

a distance between a front axle of the vehicle and a center of gravity of the vehicle; and

a distance between a rear axle of the vehicle and a center of gravity of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A steering control system comprising:

   a right side actuator for independently controlling a right wheel steering angle for a right wheel of a vehicle;
   a left side actuator for independently controlling a left wheel steering angle for a left wheel of the vehicle;
   a processor circuit; and
   a memory comprising machine readable instructions that, when executed by the processor circuit, cause the processor circuit to:

   determine a plurality of vehicle parameters;
   determine, using a machine learning model, independent control instructions for the right side actuator and the left side actuator based on the determined plurality of vehicle parameters;
   independently operate the right side actuator based on the independent control instructions to control the right wheel steering angle; and
   independently operate the left side actuator based on the independent control instructions to control the left wheel steering angle.

2. The steering control system of claim 1, wherein the determination of the independent control instructions comprises:

   determining a first optimal slip angle for the right wheel associated with a peak lateral force generation for the right wheel;
   determining a second optimal slip angle for the left wheel associated with a peak lateral force generation for the left wheel,
   wherein independent operation of the right side actuator rotates the right wheel steering angle to the first optimal slip angle, and
wherein independent operation of the left side actuator rotates the left wheel steering angle to the second optimal slip angle.

3. The steering control system of claim 1 or 2, wherein the vehicle comprises at least four wheels including the right wheel and the left wheel.

4. The steering control system of any of claims 1-3, wherein the plurality of vehicle parameters comprises a measured slip angle of at least one tire disposed on at least one wheel of the vehicle.

5. The steering control system of any of claims 1-4, wherein the plurality of vehicle parameters comprises a measured turning angle of at least one of the right wheel and the left wheel.

6. The steering control system of any of claims 1-5, wherein the plurality of vehicle parameters comprises a measured longitudinal velocity of the vehicle.

7. The steering control system of any of claims 1-6, wherein the plurality of vehicle parameters comprises a measured lateral velocity of the vehicle.

8. The steering control system of any of claims 1-7, wherein the plurality of vehicle parameters comprises a measured yaw rate of the vehicle.

9. The steering control system of any of claims 1-8, wherein the plurality of vehicle parameters comprises a front traction width between the right wheel and the left wheel of the vehicle, wherein the right wheel is a right front wheel and wherein the left wheel is a left front wheel.

10. The steering control system of any of claims 1-9, wherein the plurality of vehicle parameters comprises a rear traction width between a first rear wheel of the vehicle and a second rear wheel of the vehicle.

11. The steering control system of any of claims 1-10, wherein the plurality of vehicle parameters comprises a distance between a front axle of the vehicle and a center of gravity of the vehicle.

12. The steering control system of any of claims 1-11, wherein the plurality of vehicle parameters comprises a distance between a rear axle of the vehicle and a center of gravity of the vehicle.

13. The steering control system of any of claims 1-12, wherein the determination of the independent control instructions comprises:

training the machine learning model using a plurality of previously measured vehicle parameters comprising at least one of a group consisting of:

a previously measured slip angle of at least one tire disposed on at least one wheel of the vehicle;

a previously measured turning angle of at least one of the right wheel and the left wheel;

a previously measured longitudinal velocity of the vehicle;

a previously measured lateral velocity of the vehicle;

a previously measured yaw rate of the vehicle;

a previously measured front traction width between the right wheel and the left wheel of the vehicle, wherein the right wheel is a right front wheel and wherein the left wheel is a left front wheel;

a previously measured rear traction width between a first rear wheel of the vehicle and a second rear wheel of the vehicle;

a previously measured distance between a front axle of the vehicle and a center of gravity of the vehicle; and

a previously measured distance between a rear axle of the vehicle and a center of gravity of the vehicle; and

determining the independent control instructions based on the trained machine learning model and the plurality of vehicle parameters.

14. A method comprising:

determining, by a processor circuit of a computing device, a plurality of vehicle parameters;

determining, by the processor circuit using a machine learning model, independent control instructions for the right side actuator and the left side actuator based on the determined plurality of vehicle parameters;

independently operating, by the processor circuit, the right side actuator based on the independent control instructions to control the right wheel steering angle;

independently operating, by the processor circuit, the left side actuator based on the independent control instructions to control the left wheel steering angle.

15. A non-transitory computer readable medium comprising machine readable instructions that, when executed by the processor circuit, cause the processor circuit to:

determine a plurality of vehicle parameters for a vehicle;

determine, using a machine learning model, independent control instructions for the right side actuator and the left side actuator based on the determined plurality of vehicle parameters;

independently operate the right side actuator based on the independent control instructions to control the right wheel steering angle; and

independently operate the left side actuator based on the independent control instructions to control the left wheel steering angle.

FIG. 1
(Prior Art)

FIG. 2

FIG. 3

FIG. 4

500

| Determining, by a processor circuit of a computing device, a plurality of vehicle parameters |
| 502 |

| Determining, by the processor circuit using a machine learning model, independent control instructions for the right side actuator and the left side actuator based on the determined plurality of vehicle parameters |
| 504 |

| Independently operating, by the processor circuit, the right side actuator based on the independent control instructions to control the right wheel steering angle |
| 506 |

| Independently operating, by the processor circuit, the left side actuator based on the independent control instructions to control the left wheel steering angle. |
| 508 |

FIG. 5

FIG. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 489 597 A (UNIV JILIN) 20 December 2022 (2022-12-20) | 1,3,9-15 | INV. B62D7/08 |
| Y | * paragraphs [0009], [0010], [0026], [0030] - [0034], [0043], [0044], [0062]; claims 1,3 * | 2,4-8 | B62D6/00 B62D7/15 B62D15/02 |
| Y | US 2023/001915 A1 (BOSSE MICHAEL CARSTEN [US] ET AL) 5 January 2023 (2023-01-05) * paragraphs [0009] - [0011], [0020] - [0024]; figures 2,4 * | 2 | |
| Y | US 2022/289287 A1 (VAN ENDE KRISTOF [DE] ET AL) 15 September 2022 (2022-09-15) * paragraphs [0012], [0013], [0016], [2446], [0047] * | 4-8 | |

**TECHNICAL FIELDS SEARCHED (IPC)**

B62D

The present search report has been drawn up for all claims

| Place of search | Date of completion of the search | Examiner |
|---|---|---|
| The Hague | 11 May 2026 | Areal Calama, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3390

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2026

| Patent document cited in search report | | Publication date | Patent family member(s) | | Publication date |
|---|---|---|---|---|---|
| CN 115489597 | A | 20-12-2022 | NONE | | |
| US 2023001915 | A1 | 05-01-2023 | NONE | | |
| US 2022289287 | A1 | 15-09-2022 | CN | 114269632 A | 01-04-2022 |
| | | | DE | 102019212432 B3 | 03-12-2020 |
| | | | EP | 4017786 A1 | 29-06-2022 |
| | | | US | 2022289287 A1 | 15-09-2022 |
| | | | WO | 2021032343 A1 | 25-02-2021 |

EPO FORM P0459

For more details about this annex : see Official Journal of the European Patent Office, No. 12/82